# EUROPEAN PATENT APPLICATION

(11) **EP 0 525 758 A2**
(43) Date of publication of application: **03.02.1993**
(21) Application number: 92112984.7
(22) Date of filing: 30.07.1992
(51) Int. Cl.: G05B 19/05

(54) **Programming device for programmable controllers**

(30) Priority: 31.07.1991 JP 215937/91
(71) Applicant: TOYODA KOKI KABUSHIKI KAISHA, Kariya-shi Aichi-ken (JP)
(72) Inventor: Sakakibara, Yoshio, Handa-shi, Aichi-ken (JP); Kato, Hidetoshi, Kariya-shi, Aichi-ken (JP); Sugiura, Kenrou, Takahama-shi, Aichi-ken (JP); Uno, Teiji, Kariya-shi, Aichi-ken (JP); Yoshikura, Fuyuhiko, Nagoya-shi, Aichi-ken (JP)
(74) Representative: Pellmann, Hans-Bernd, Dipl.-Ing.

(57) **Abstract**

A programming device for PCs which are interlocked through a link line is described. In the present programming device, an allocation table representing a relation between respective PCs and devices controlled by the respective PCs is entered. In the first program for the first PC, an external input element belonging to the second PC is described with an identifier. The external input element is extracted from the first program and I/O element corresponding to the external input element is designated as a referred-to I/O element in the second program. The referred-to I/O element is related to a link element assigned to a link address which can be commonly accessed by the first and second PCs. An instruction step for making status data of the link element equal to status data of the referred-to I/O element is added to the second program. In the first program, the identifier of the external element is converted into the link address assigned to the link element. Thus, programs enabling an interlock control among a plurality of PCs are automatically created.

## Description

### BACKGROUND OF THE INVENTION

### Field of the Invention

The present invention relates to a programming device for creating programs for the sequence control of a plurality of programmable controllers (hereinafter abbreviated to "PCs") in a system where the PCs are interconnected by a signal transmission link line to enable interlock control. In the system the respective PCs can refer mutually to input and output elements (I/O elements) belonging to another PC through virtual link relays, i.e., link relay memory.

### Description of the Related Art

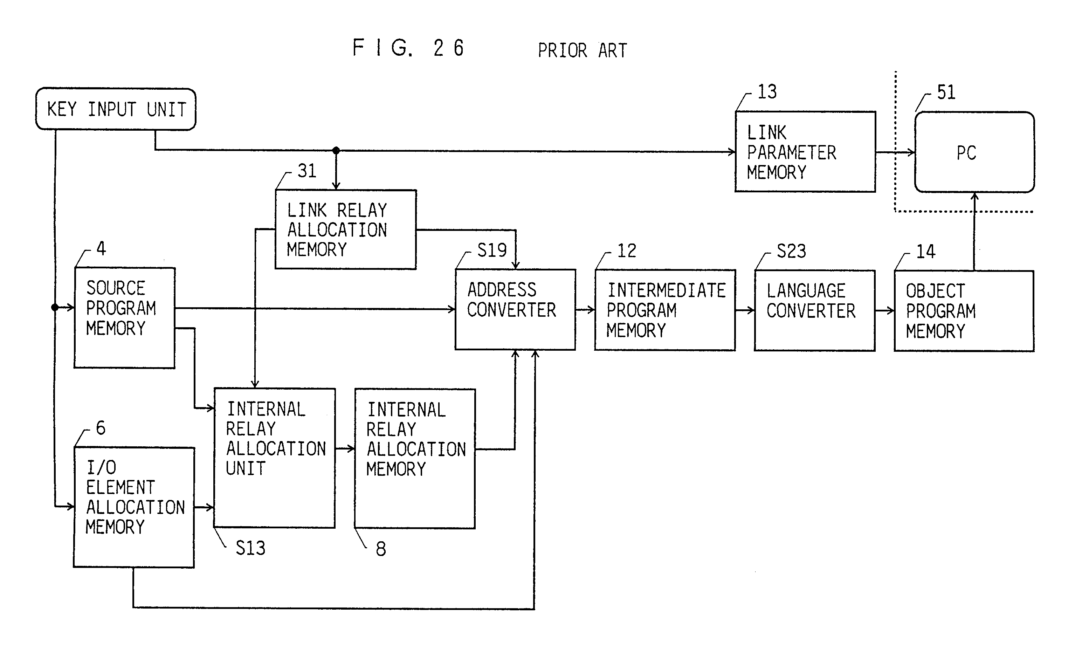

Fig. 26 shows a previously proposed programming device for creating programs for the sequence control of PCs. This programming device creates a ladder circuit visually representing the sequence control of the PCs together with identifiers specifying symbols of I/O elements by operating a key input unit, and stores a source program corresponding to the ladder circuit in a source program memory 4.

Link parameters entered by the key input unit are stored in a link parameter memory 13. The link parameters are ones for controlling a transmission of status data of link relays among the PCs when a program for one of the PCs refers to the I/O elements of other PCs.

The assignment data of the link relays to link relay addresses, i.e., addresses in a link relay memory for storing status data of the link relays, are entered by the key input unit and stored in a link relay allocation memory 31. The assignment data of the I/O elements to I/O element addresses, i.e., addresses in an I/O element memory for storing status data of the I/O elements, are entered by the key input unit and stored in an I/O element allocation memory 6.

Internal relay addresses, i.e., addresses in an internal relay memory for storing status data of internal (virtual) I/O elements, are assigned to the internal (virtual) I/O elements included in source programs stored in a source program memory 4 and the assignment data are stored in an internal relay allocation memory 8. Then, identifiers specifying the I/O elements, the internal relays and the link relays which are included in the programs stored in the source program memory 4 are converted into the respective assigned addresses to create an intermediate program by an address converter S19 with reference to the I/O element allocation memory 6, the internal relay allocation memory 8 and the link relay allocation memory 31. And the intermediate program is stored in an intermediate program memory 12.

A language converter S23 converts the intermediate program into an object program which can be written in a sequence control program memory of the PC, and stores the object program in an object program memory 14. The stored link parameters and object program are stored in respective memories of the PCs according to key operation.

The programming device shown in Fig. 26 has many problems in creating the program that enables mutual reference of the status of the I/O elements and the internal relays among a plurality of PCs interconnected by the link line.

First, it is a problem how to read the status data of the I/O element and the internal relay belonging to another PC, which are referred to in the program for a certain PC.

If different addresses are individually allocated to all the I/O elements and the internal relays for all the PCs and the status data of all the I/O elements and the internal relays are stored simultaneously in memories of all the PCs, it is possible to create a program without discrimination between the I/O elements and the internal relays belonging to the self-PC corresponding to the program to be created and those belonging to another PC. However, all the PCs need to be provided with the memories having common addresses, respectively, for storing the status data of all the I/O elements and the internal relays for all the PCs. Therefore, each PC needs a memory having a very large capacity. Furthermore, a large number of addresses is necessary for specifying all the I/O elements and the internal relays, which makes the description of programs difficult.

There is another method to solve the difficulty. In the method local addresses which can be accessed only by the self-PC are assigned to the I/O elements and the internal relays. Common addresses which can be commonly accessed by all the PCs are assigned to the I/O elements and the internal relays being referred to by other PCs in addition to the local addresses. The contents of the common address of respective memories of respective PCs are controlled to be identical. This method needs to create a program by using information indicating whether or not the I/O elements and internal relays described in the program of a certain PC belong to another PC, i.e., external input elements, or whether or not the I/O elements and internal relays belonging to a certain PC is referred to by another PC, i.e., referred to I/O elements. The I/O elements referred to by another PC must be allocated to the common addresses and it is necessary to create an additional link circuit program to store the status data of the referred-to I/O elements in the common address of the memory.

In a system, where the respective of a plurality of PCs interconnected by a link line control a plurality of devices, the foregoing difficulty is enhanced in the case of changing the programs so that the device having been controlled by a certain PC may be controlled by another PC.

It is very difficult to carry out the foregoing procedures, i.e., linkage procedure, correctly for the programs of all the PCs. Thus, the device of Fig. 26 requires the operator to create a large number of steps of the programs for a plurality of PCs and hence the operator is liable to make errors in the programs.

In changing of assignment of devices to PCs controlling them, the foregoing troublesome procedure must be executed again.

### SUMMARY OF THE INVENTION

The present invention has been made to solve the foregoing problems and it is therefore an object of the present invention to facilitate the creation of programs for PCs capable of interlock control.

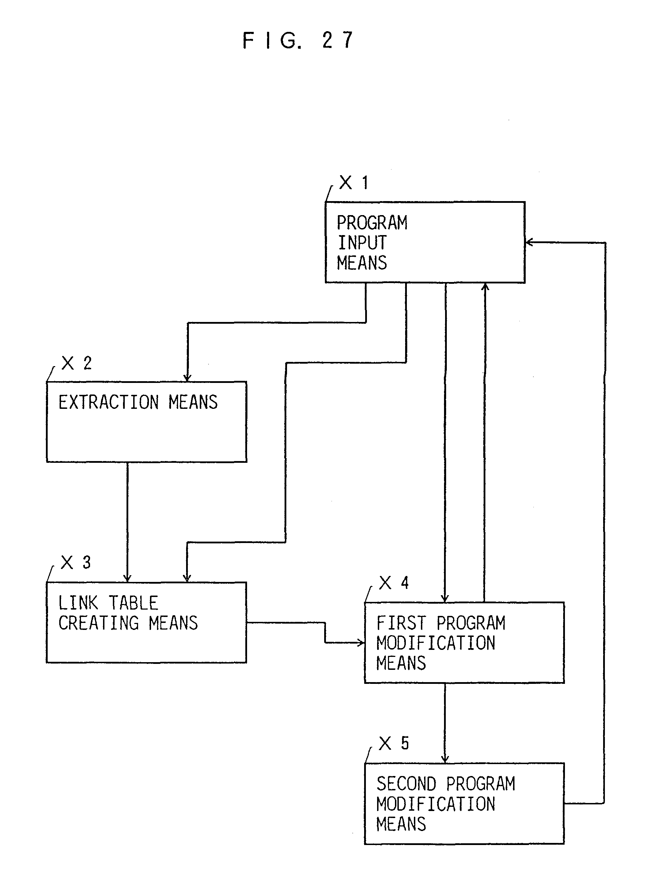

As shown in Fig. 27, the present invention relates to a programming device for creating programs for a sequence control for first and second programmable controllers (PCs) wherein status data of an I/O element connected to said second PC is read through a signal transmission link line by said first PC and used as the status data of an external input element in said first PC for the sequence control to enable an interlock control between said PCs, said programming device comprising:
program input means for inputting a first program for said first PC including said external input element with an identifier, which is said I/O element belonging to said second PC, and a second program for said second PC;
extraction means for extracting said external input element from said first program;
link table creating means for creating a link table designating that said I/O element belonging to said second PC and having the same identifier as said external input element is a referred-to I/O element being referred to by said first PC;
first program modification means for relating said referred-to I/O element designated in said link table to a link element allocated to a link address which can be commonly accessed by said first and second PCs, and adding an instruction step for making status data of said link element equal to status data of said referred-to I/O element to said second program including said referred-to element; and
second program modification means for converting said identifier of said external input element into said address of said link element in said first program including said external input element.

When an instruction to start the routine is given after the program has been entered, the programming device extracts the external input element belonging to second PC from the first program. Next, in the second program the I/O element having the same identifier as the external input element is designated as the referred-to I/O element referred by another PC on the link table.

Then, a link table indicating whether or not the I/O element is a referred-to I/O element is created for each I/O element. And the referred-to I/O element is allocated sequentially to the link element assigned to the link address which is commonly accessed by the first and second PCs.

Then, the programming device corrects the program with reference to the link element assigned to the link address; that is, the programming device adds a command step to make the status of each referred-to I/O element equal to that of the corresponding link element in the second program. Further, the device converts the address of each external input element into that of the corresponding link element in the first program.

Thus, a program for interlock control can readily be created.

### BRIEF DESCRIPTION OF THE DRAWINGS

Fig. 1 is a block diagram of a system having a plurality of PCs interconnected by a link line, stations to be controlled respectively by the PCs, and devices disposed respectively at the stations;
Fig. 2 is a block diagram of a programming device in a preferred embodiment according to the present invention;
Fig. 3 is a block diagram showing the functional units of the programming device of Fig. 2;
Fig. 4 is a flow chart of a routine to be executed by a CPU included in the programming device of Fig. 2;
Fig. 5 is a relay ladder diagram showing a program entered by the operator and stored in a source program memory of the programming device of Fig. 2;
Fig. 6 is a flow chart of a routine to be executed in step S11 of Fig. 4;
Fig. 7 is a view of construction of individual programs for PCs;
Fig. 8 is a view of a device allocation table;
Fig. 9 is a view of an I/O element allocation table;
Fig. 10 is a flow chart of a routine to be executed in step S13 of Fig. 4;
Fig. 11 is a view of an internal relay allocation table;
Fig. 12 is a flow chart of a link signal extraction routine to be executed in step S15 of Fig. 4;
Fig. 13 is a view of a link signal designation table which describes the signal name of each of the I/O elements of each PC and the indication of whether or not each I/O element is a referred-to I/O element referred to by another PC;
Fig. 14 is a flow chart of a link circuit creating routine to be executed in step S17 of Fig. 4;
Fig. 15 is a view of a link signal/address correspondence table which describes a correspondence relation among identifiers of input elements , link element names and addresses in link circuits;
Fig. 16 is a view of a ladder diagram corresponding to a program developed by adding a link circuit created by the link circuit creating routine of Fig. 14 to the program of Fig. 7;
Fig. 17 is a flow chart of an address conversion routine to be executed in step S19 of Fig. 4;
Fig. 18 is a view of a ladder diagram corresponding to a program after the address conversion routine of Fig. 17 has been executed;
Fig. 19 is a view of a link parameter table describing link parameters (communication mode designation) for each PC;
Fig. 20 is a block diagram of each of PCs shown in Fig. 1;
Fig. 21 is a block diagram of functional units of the PC of Fig. 20;
Fig. 22 is a view explaining signal transmission and reception through the link line of each of PCs of Fig. 1;
Figs. 23 and 24 are flow charts of a communication control routine to be executed by a CPU included in each PC;
Fig. 25 is a view for explaining data transmitted on the link line;
Fig. 26 is a block diagram of a prior art programming device; and
Fig. 27 is a block diagram of the present invention.

### DESCRIPTION OF THE PREFERRED EMBODIMENTS

A programming device in a preferred embodiment according to the present invention will be described herein after in terms of the following subjects.

(1) System Controlled by a Plurality of PCs
(2) Programming device
(3) Operation of the Programming device
(4) Communication in the System Controlled by a Plurality of PCs.

### (1) System Controlled by a Plurality of PCs

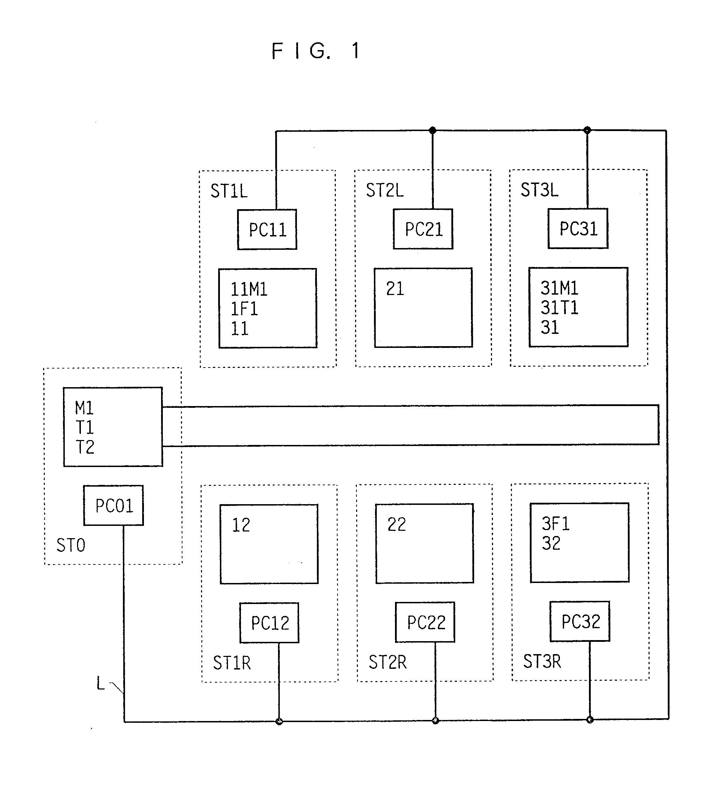

Fig. 1 shows a transfer machine having stations STO, ST1 L, ST1 R, ST2L, ST2R, ST3L and ST3R controlled by PCs PC01, PC11, PC12, PC21, PC22, PC31 and PC32, respectively. The PCs PC01 to PC32 are interconnected by a link line L. Devices M1, T1 and T2, devices 11 M1, 1 F1 and 11, a device 12, a device 21, a device 22, devices 31 M1, 31 T1 and 31, and devices 3F1 and 32 are installed at the stations STO, ST1 L, ST1 R, ST2L, ST2R, ST3L and ST3R, respectively.

The programming device is capable of loading the PCs interconnected by the link line L with respective programs by a simple procedure. In this embodiment, the programs are prepared device by device, and I/O elements such as limit switches and solenoid valves belonging to the devices are identified using identifiers.

When preparing a program for a specific device, I/O elements belonging to the specific device are identified using identifiers each constructed of element identification code. With respect to I/O elements belonging to the other devices, they are identified using identifiers each constructed of a device identification code and an element identification code. A program which enables PCs to refer the I/O elements belonging to other PCs is created automatically.

Data defining the control relationship between respective PCs and the devices controlled by the respective PCs are entered by operating a keyboard. Further, for respective PCs, Data defining addresses of memories for storing status data of the real elements, i.e., elements other than internal virtual relays (dummy relays) are inputted by a keyboard. Hereinafter the real element other than the internal relay is defined as the I/O element.

### (2) Programming device

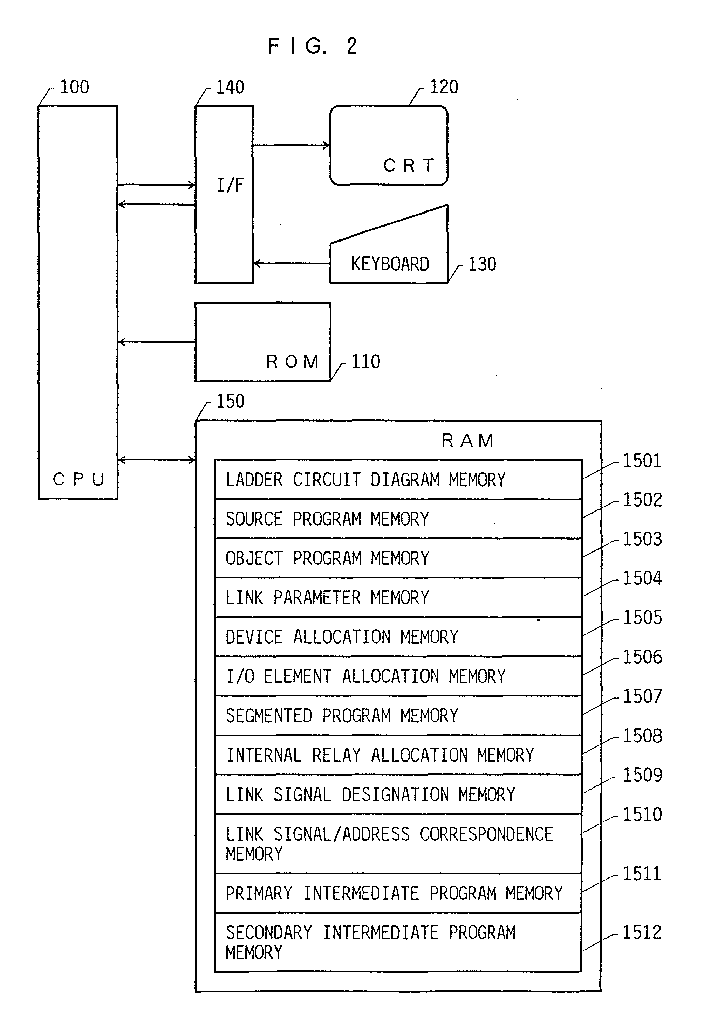

Referring to Fig. 2, the programming device comprises a CPU 100 which creates a program for the sequence control of each PC and a program to enable each PC to refer the statuses of the I/O elements belonging to other PCs, a ROM 110 for storing a PC program creating program, a CRT 120 for displaying a ladder circuit diagram, a keyboard 130 for entering data representing symbols of the I/O elements for creating the ladder circuit diagram, and control data for controlling an operation for creating a main program, an I/O interface 140 interposed between the CPU 100, and the CRT 120 and the keyboard 130, and a RAM 150 for storing various data, i.e., data for displaying the ladder circuit diagram, a sequence control program and the like.

The RAM 150 has a ladder circuit diagram memory 1501 for storing a ladder circuit diagram, a source program memory 1502 for storing a source program for the sequence control corresponding to the ladder circuit diagram, an object program memory 1503 for storing an object program described by a binary coded machine language and created by converting the source program, and a link parameter memory 1504 for storing data for controlling a transmission of status data.

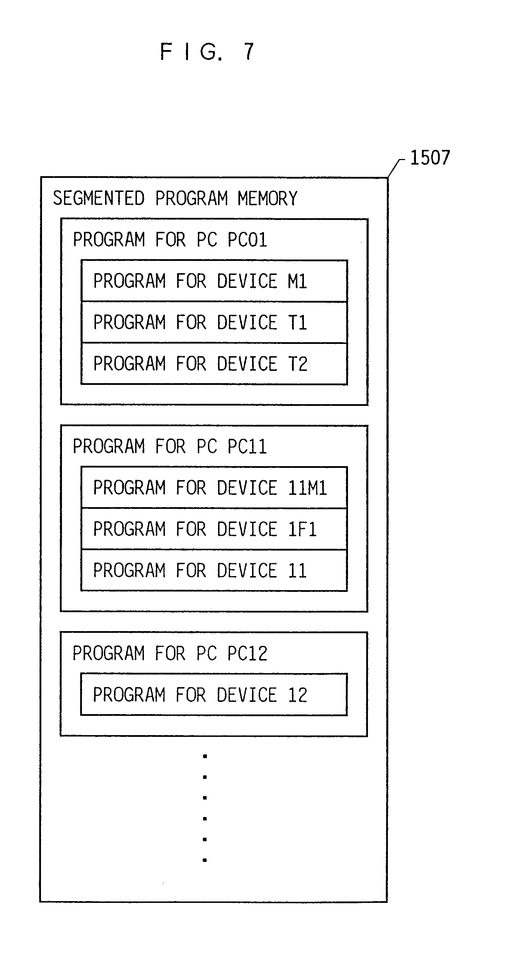

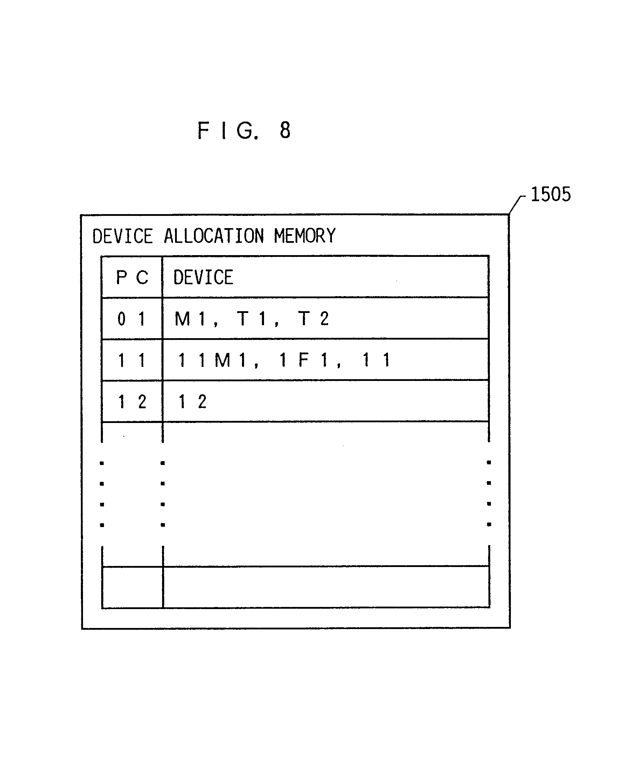

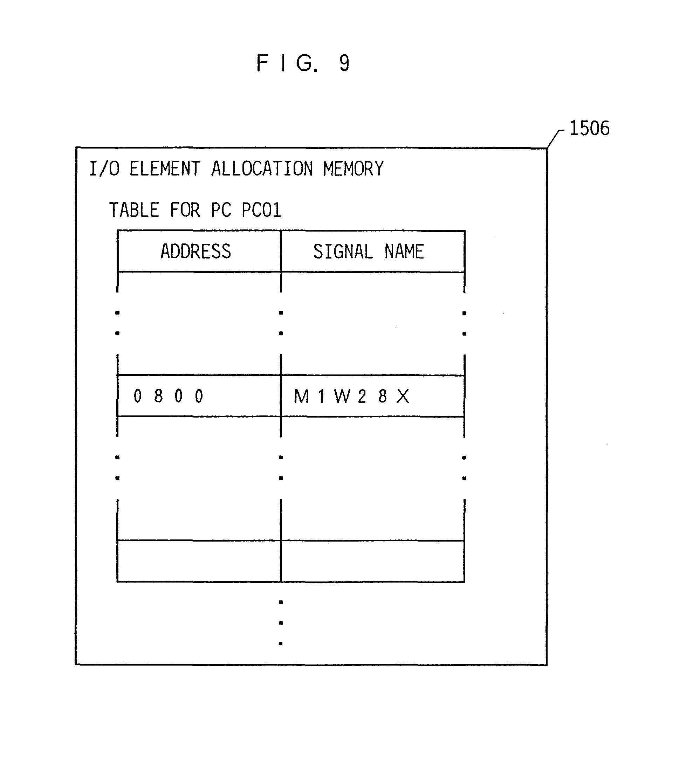

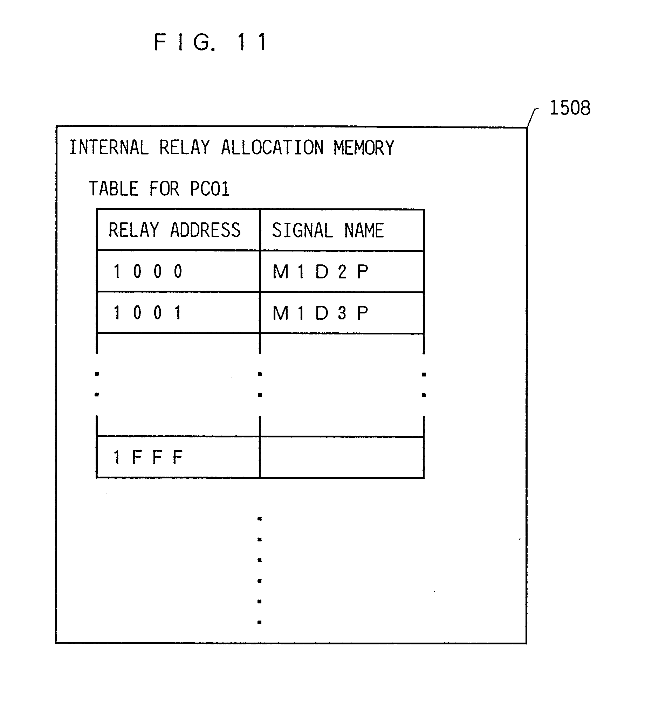

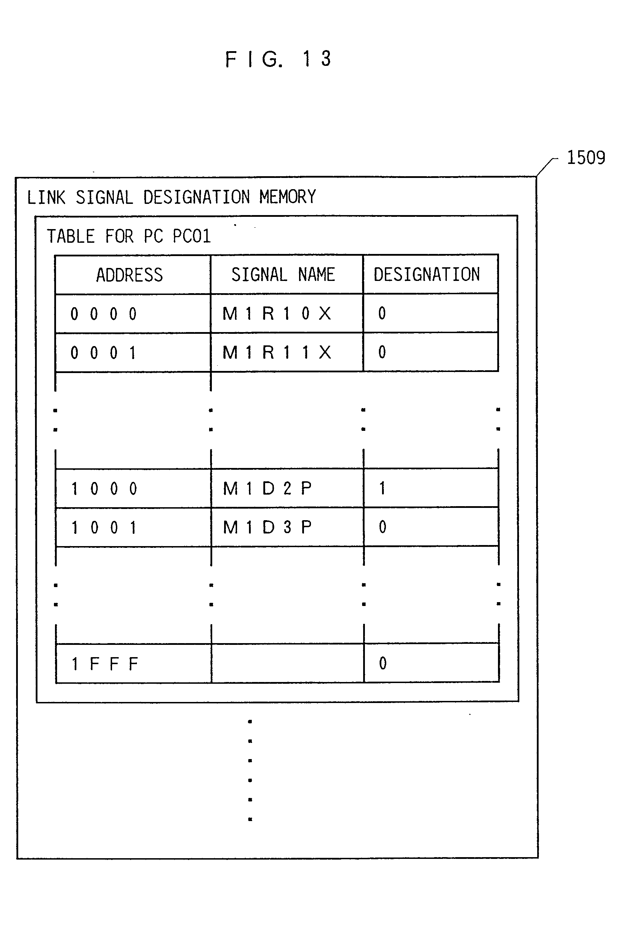

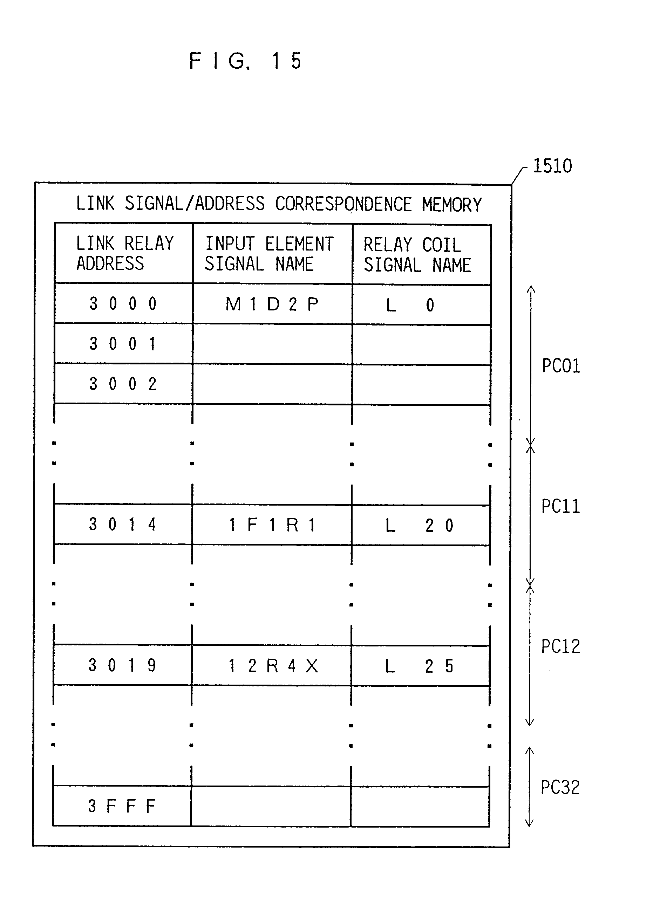

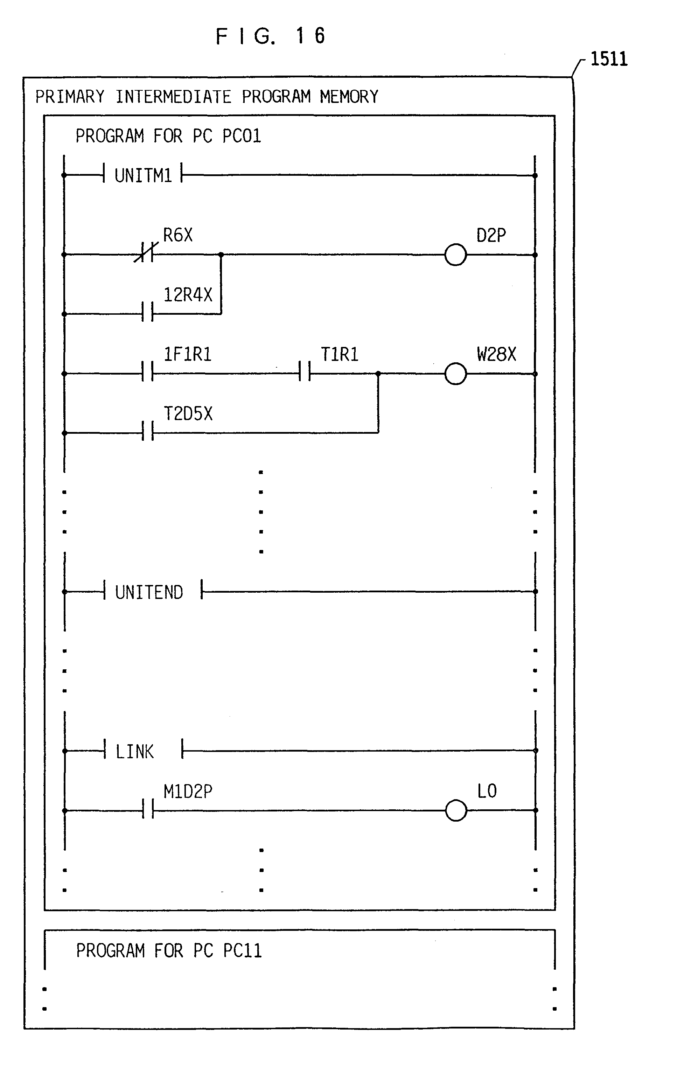

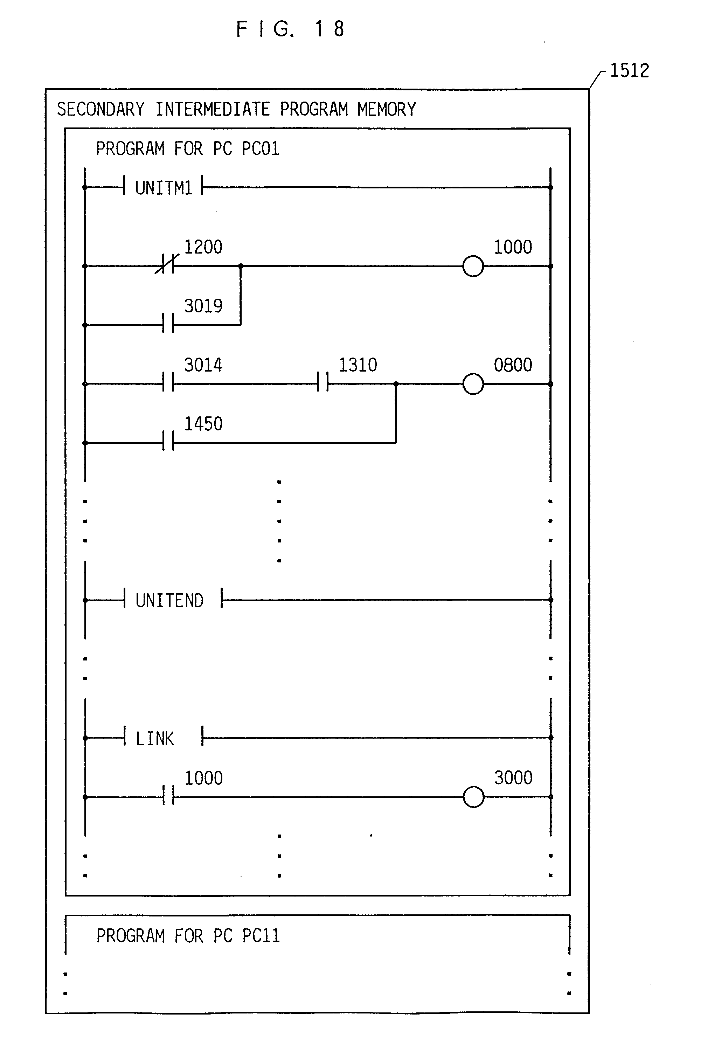

And also the RAM 150 has a device allocation memory 1505, an I/O element allocation memory 1506, a segmented program memory 1507, an internal I/O relay allocation memory 1508, a link signal designation memory 1509, a link signal/address correspondence memory 1510, a primary intermediate program memory 1511 and a secondary intermediate program memory 1512, as memories for storing various data necessary for converting the source program into the object program. The device allocation memory 1505 stores a table listing a group of devices controlled by respective PCs as shown in Fig. 8. The I/O element allocation memory 1506 stores a table indicating a relation between relay addresses, which indicate I/O addresses assigned to the I/O elements, and signal names, i.e., identifiers of the I/O elements, as shown in Fig. 9. The segmented program memory 1507 stores respective groups of source programs gathered from the respective PCs as shown in Fig. 7. The internal I/O relay allocation memory 1508 stores a table indicating a relation between memory addresses and signal names, i.e., identifiers of the internal (or virtual) relays as shown in Fig. 11. The link signal designation memory 1509 stores data indicating whether or not the I/O elements are referred by other PCs in the ladder circuit as shown in Fig. 13. The link signal/address correspondence memory 1510 stores a table indicating a relation among link relay addresses, relay coils and referred-to I/O elements as shown in Fig. 15. The primary and secondary intermediate program memories 1511 and 1512 store primary and secondary intermediate programs as shown in Figs. 16 and 18, respectively.

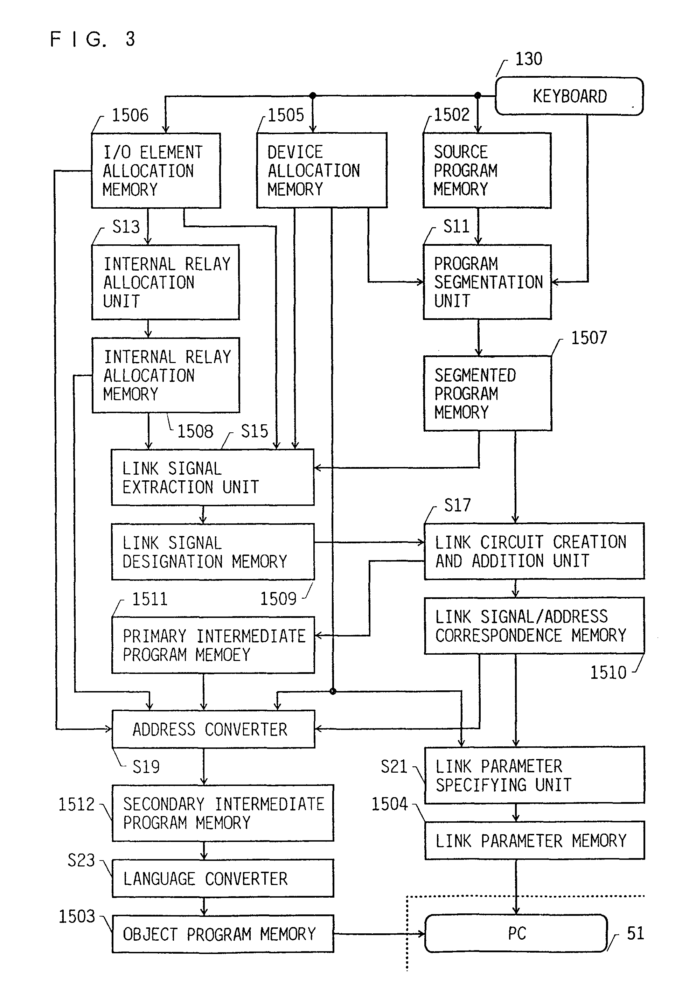

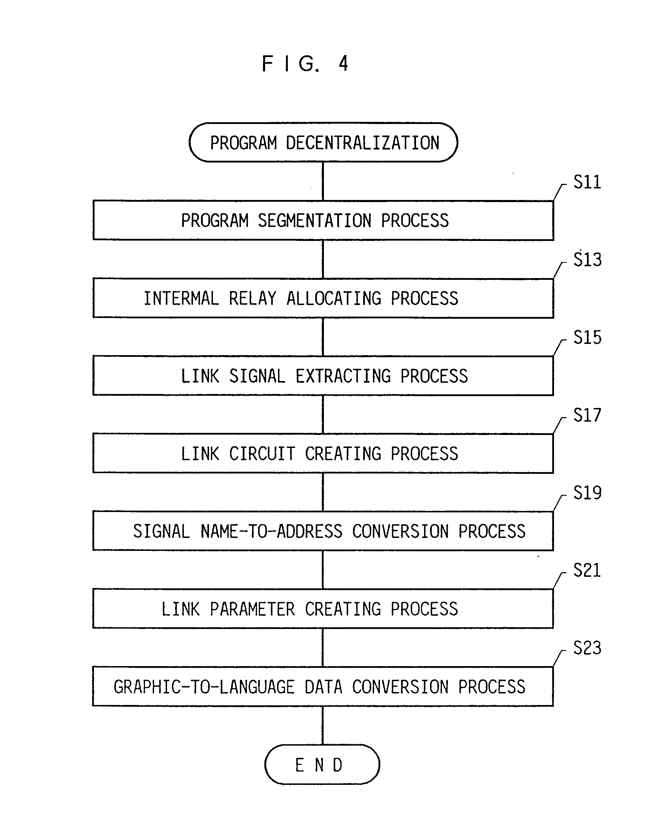

Fig. 3 shows the functional units of the programming device, which are divided according to program steps to be executed by the CPU 100 and Fig. 4 shows a process to be executed by the CPU 100.

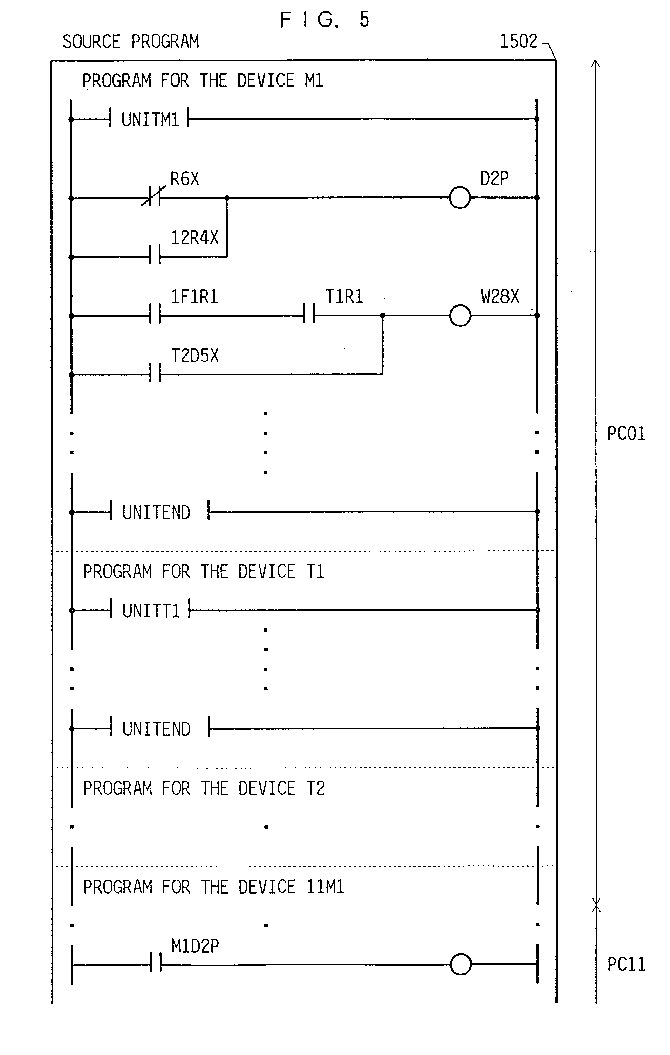

The CRT 120 and the keyboard 130 of the programming device are operated to create, for example, the ladder circuit diagram as shown in Fig. 5, which describes the sequence control program for controlling the devices. The created ladder circuit diagram is stored in the ladder circuit diagram memory 1501 of the RAM 150. The ladder circuit diagram is converted into the source program. The source program describes a sequential operation to determine the statuses of the output elements depending on the statuses of the input elements. Then, the source program is converted into the object program and the object program is stored in the object program memory 1503 of the RAM 150. In Fig. 5, the input elements of the ladder circuit diagram are the contacts of relays and limit switches, and the output elements are the relay coils and the like. The input elements and the output elements are referred to inclusively as the I/O elements.

The ladder circuit diagram is created for every device, e.g., M1, T1, T2, 11 M1. Referring to Fig. 5, the I/O elements are specified by alphanumeric identifiers "R6X", "D2P', "12R4X", "1F1R1", "Tl R1" and the like. Each of I/O elements belonging to a certain device is identified by an identifier consisting of an element identification code in a ladder circuit diagram for controlling the device. On the contrary, each of I/O elements belonging to other devices is identified by an identifier consists of a device identification code specifying one of the other device, and an element identification code specifying the I/O element in the device. For example, the elements identification codes in the foregoing identifiers are "R6X", "D2P", "R4X", "R1 ", "R1" and the like. They are names used to distinguish the I/O elements belonging to the devices.

In the input element specified by the identifier "12R4X", "12" is the device identification code and "R4X" is the element identification code. The input element belongs to the device 12. If the identifier of a certain I/O element has a device identification code in the ladder circuit for a certain device, it is recognized that the I/O element belongs to another device.

Hereinafter, I/O elements belonging to devices controlled by another PC will be referred to as external input elements. And also, the element identification codes will simply be referred to as element names, the device identification codes will be referred to as device names, and the identification codes will be referred to as identifiers or signal names.

In the ladder circuit diagram of Fig. 5, the programs for the devices are segmented by start labels, such as UNITM1 or the like, and end labels, such as UNITEND.

### (3) Operation of the Programming Device

The keyboard 130 is operated to store the source program corresponding to the ladder circuit diagram as shown in Fig. 5 in the source program memory 1502. Data representing the correspondence of respective PCs and respective groups of the devices to be controlled by the respective PCs are entered to create the device allocation table as shown in Fig. 8 in the device allocation memory 1505. Data for assigning the I/O elements to addresses of the memory in which status data of the I/O elements are stored are input to create the I/O element allocation table as shown in Fig. 9 in an I/O element allocation memory 1506, A predetermined key of the keyboard 150 is operated to make the programming device start a routine shown in Fig. 4. The routine shown in Fig. 4 will be described hereinafter.

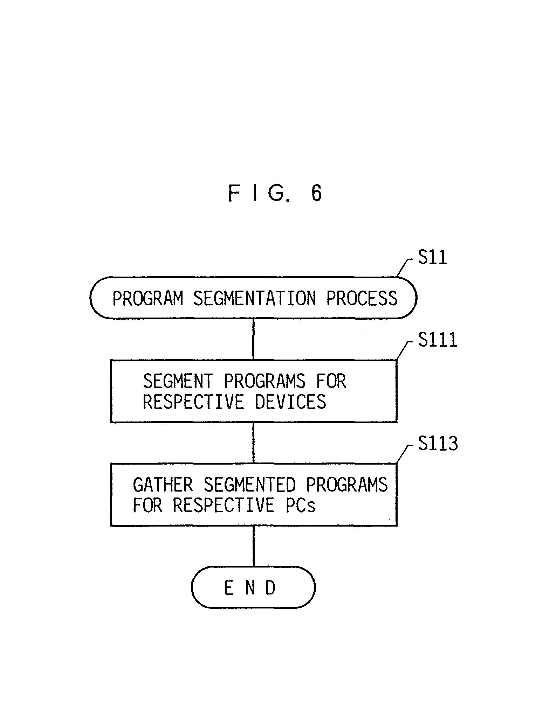

### a. Program Segmentation Process (Step S11, Fig. 6)

In step S11, i.e., a program segmentation step, the source program stored in the source program memory 1502 is segmented into the respective programs for controlling the respective devices, and the programs for controlling the devices controlled by the same PC are selected and gathered in one program to be executed by the PC. The programs for the PCs, as shown in Fig. 7, are stored in the segmented program memory 1507. The segmentation is carried out with reference the start labels and the end labels of the ladder circuit diagram.

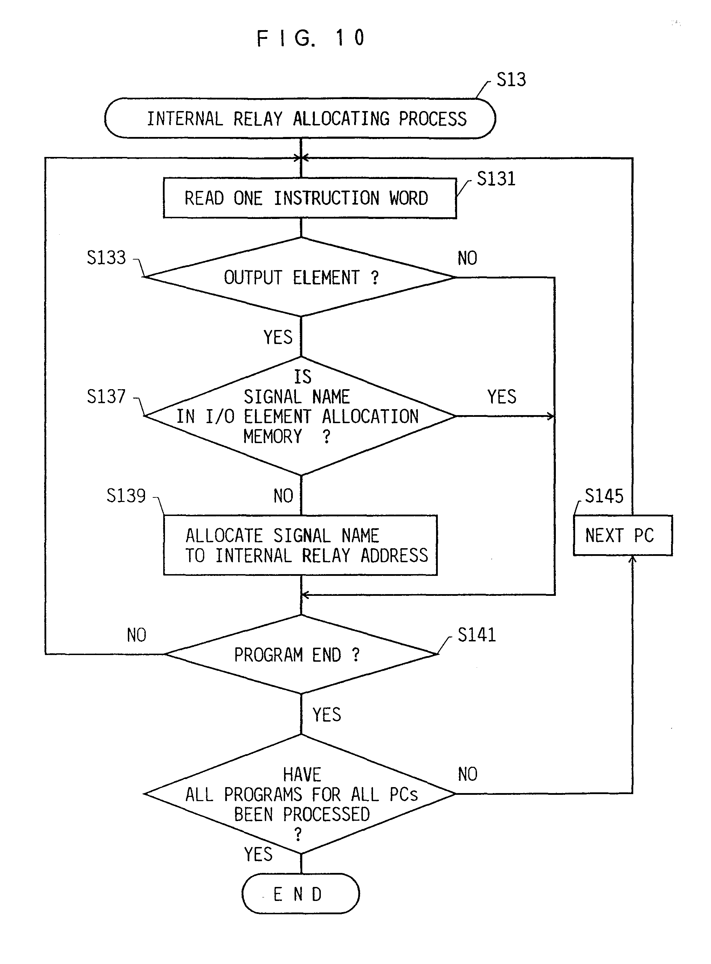

### b. Internal Relay Allocating Process (Step S13, Fig. 10)

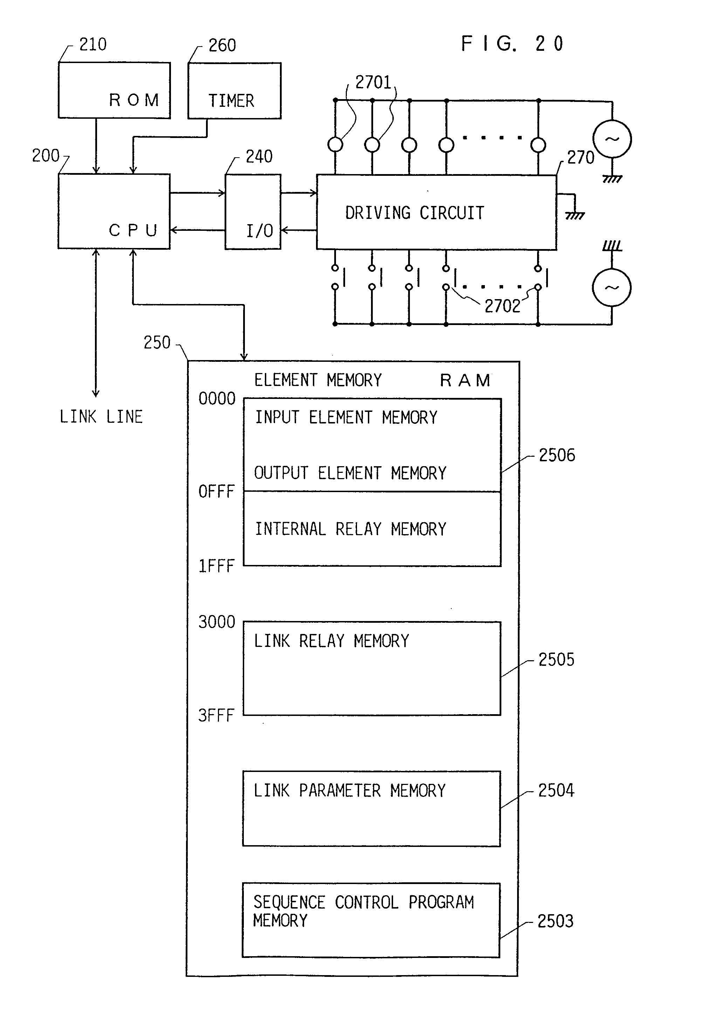

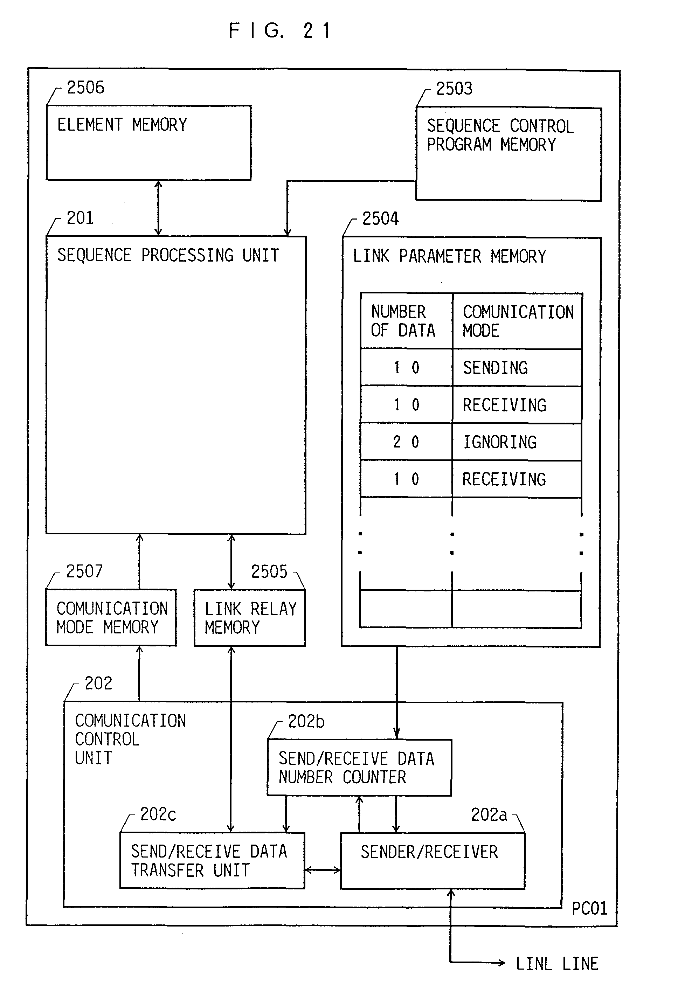

In step S13, i.e., the internal relay allocating step, the addresses of an I/O element memory 2506 (Figs. 20 and 21) are allocated to the signal names (device name + element name) of the internal relays, in the program stored in memory 1507 as shown in Fig. 7, and the assigned addresses are stored in the internal relay allocation memory 1508. It is easily judged whether or not an element of the ladder circuit is the internal relay by referring to the I/O element allocation memory 1506.

A procedure of allocating the internal relays to the addresses of the I/O element memory 2506 will be described hereinafter with reference to Fig. 10.

In step S131, one instruction word is read from the segmented program memory 1507. If the one instruction word is one corresponding to the output element, i.e., the decision in step S133 is affirmative, step S137 is executed. If the signal name of the instruction word is not in the I/O element allocation memory 1506, i.e., the decision in step S137 is negative, it is judged that the output element is an internal relay. Accordingly, the address of the I/O element memory 2506 is allocated to the internal relay specified by the signal name in step S139. Then, step S131 is repeated to read the next instruction word and the same process is repeated. This process is executed for all the programs to create the internal relay allocation table indicating a relation between the addresses of the I/O element memory 2506 and the signal names of the internal relays in the internal relay allocation memory 1508 (Fig. 11).

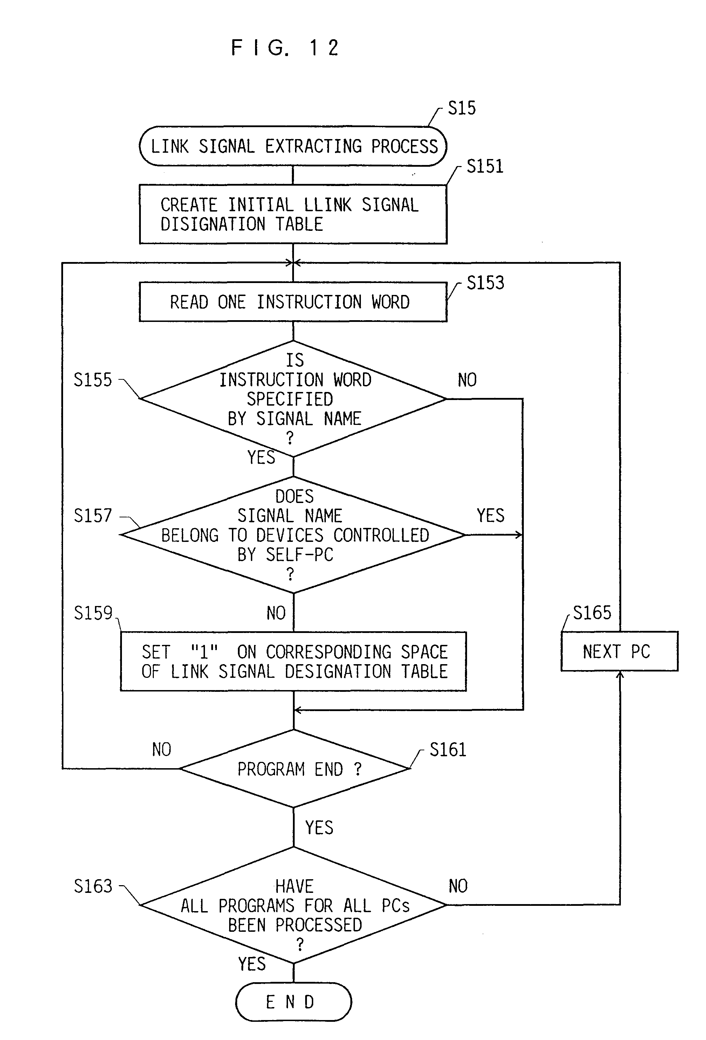

### c. Link Signal Extracting Process (Step S15, Fig. 12)

A link signal extracting process in step S15 extracts an I/O element to be referred to by another PC , i.e., a referred-to I/O element, and stores designation data in the link signal designation memory 1509 (Fig. 13). The designation data is "1" if if the I/O element is the referred to I/O element, and the designation data is "0" if the I/O element is not the referred-to I/O element.

The link signal is a signal indicating status of the referred-to I/O element and to be transmitted to another PC which refers to the I/O element.

First, an initial link signal designation table is created in the link signal designation memory 1509 in step S151. The link signal designation table is a table for designating the memory address whose status data has to be transmitted to another PC. The memory address of the I/O element memory 2506 is assigned as shown in the tables stored in the I/O element allocation memory 1506 and the internal relay allocation memory 1508. That is, the addresses "0000" to "OFFF" are assigned to the I/O elements and the addresses "10001" " to "1 FFF" are assigned to the internal relays. In the initial state, are the designation data are "0".

Then, one instruction word is read from the segmented program memory 1507 in step S153. If the one instruction word has a signal name, i.e., the decision in step S155 is affirmative, step S157 is executed. In step S157, it is judged whether or not the I/O element or the internal relay identified by the signal name belongs to another PC by referring to the device allocation memory 1505. That is, it is judged whether or not the element is the external input element. If the I/O element or the internal relay belongs to another PC, in step S159 the designation data of the I/O element or the internal relay belonging to the another PC is set to "1" " in the link signal designation memory 1509. That is, it is designated that the signal of the I/O element or the internal relay of another PC is the link signal. By the designation, the I/O element or the internal relay is designated as the referred-to I/O element.

For example, the signal name, i.e., identifier of the input element 12R4X included in the program for the PC PC01 has the device name "12" indicating the device to be controlled by another PC PC12 and the element name "R4X". Accordingly, the input element 12R4X is the external input element of the PC PC01. In this case, the designation data of the I/O element specified by the signal name 12R4X included in the table for the another PC PC12 in the link signal designation memory 1509 is set to "1". That is, the I/O element 12R4X belonging to the PC PC12 is designated as the referred-to I/O element referred to by the PC PC01.

On the contrary in Fig. 13, the designation data of the I/O element specified by the signal name M1 D2P included in the table for the PC PC01 is set to "1". Because the signal name M1 D2P belonging to the PC PC01 is referred to in the program for another PC PC11 as shown in Fig. 5.

This process is executed for all the programs for all the PCs and the designation data for the I/O elements to be referred to by other PCs, i.e., the referred-to I/O elements, are set to "1" " in the link signal designation memory 1509.

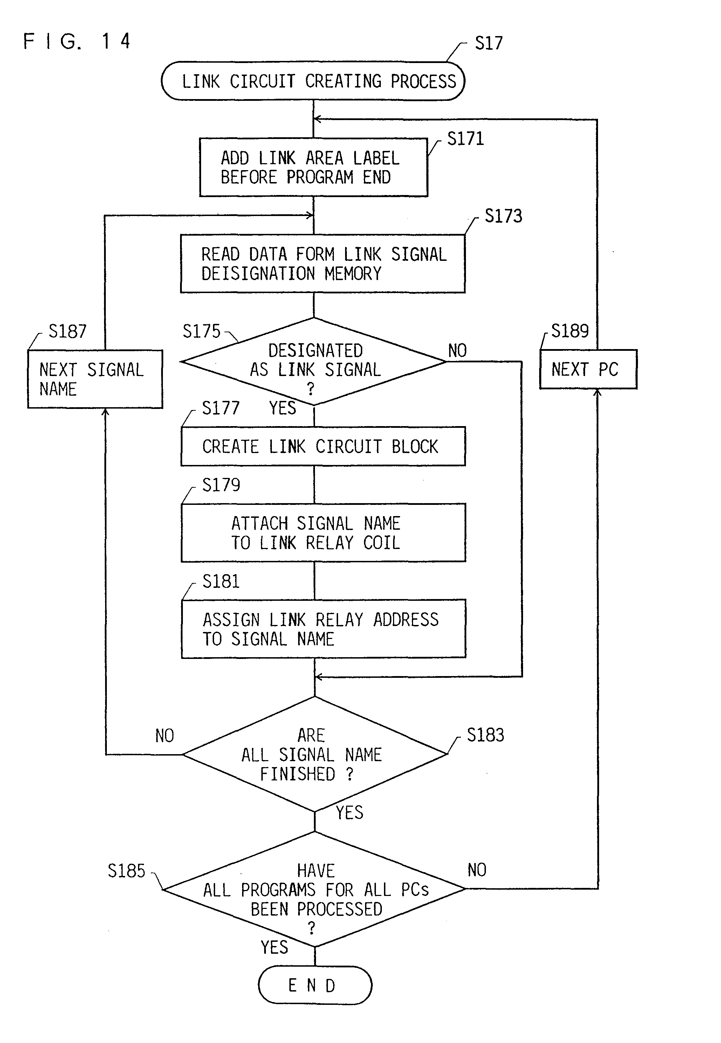

### d. Link Circuit Creating and Adding Process (Step S17, Fig. 14)

In a link circuit creating and adding step S17, a command step for making the status of a link relay coil equal to that of the referred-to I/O element is added to the program including the referred-to I/O element, referring to the table stored in the link signal designation memory 1509, that is, a link circuit is created and added to the program. The link circuit comprises an input element specified by the same element name as that specifying the referred-to I/O element, and an output element, i.e., a link relay coil having a status data varying according to the status data of the input element.

In the link circuit creating and adding step S17, the link relay coils are specified by different signal names and common link relay addresses, i.e., address in the link relay memory 2505, which can be looked up sequentially by all the PCs, are assigned to the link relay coils. The link relay addresses employed in this embodiment are "3000" to "3FFF".

The link circuit creating and adding process is repeated for all the PCs beginning with the PC PC01.

First, in step S171, a link area label is added to the program for each PC (the PC PC01 in the first cycle of the process) at a position next to the last instruction in the program.

Then, the designation data is read sequentially from the link signal designation memory 1509 (Fig. 13) in step S173. If the designation data is "1", i.e., the decision in step S175 is affirmative, in step S177, the link circuit is created and added to the program for the PC to which the I/O element or internal relay designated by the table in the memory 1509 belongs. The link circuit comprises the input element which refers to the status data of the I/O element or internal relay designated as the referred-to I/O element, and the link relay coil having the status data varying according to the status data of the input element. Different signal names L0, L1, L2, ... are attached to the link relay coils in step S179, respectively. The link relay addresses which can be commonly referred to by all the PCs are assigned respectively to the link relay coils in step S181.

For example, the designation data of the signal name M1 D2P included in the link signal designation table for the PC PC01 are set to "1" " as shown in Fig. 13. Accordingly, an instruction step, which comprises the input element specified by the signal name M1 D2P and referring to the status data of the referred-to I/O element specified by the signal name M1 D2P, and the link relay coil varying according to the status data of the input element specified by the signal name M1 D2P, is created as shown in Fig. 16. The instruction step is written on the program for the PC PC01 at a position next to the link area label.

The signal name M1 D2P is the first one designated in the link signal designation table for the PC PC01. Therefore, as shown in Fig. 15, the leading address "3000" in the link relay memory 2505 is assigned as the link relay address to the link relay coil L0 whose status varies according to the status of the input element specified by the signal name M1 D2P.

The foregoing process is executed repeatedly for all the signal names whose designation data are "1" in the link signal designation memory 1509 (Fig. 13) to add all necessary link circuits to the respective programs. Consequently, a source program corresponding to the relay ladder diagram as shown in Fig. 16 is stored in the primary intermediate program memory 1511.

The table defining correspondence of of the signal names of the input elements of the link circuits to the addresses of the link relay coils is made in the link signal/address correspondence memory 1510 as shown in Fig. 15.

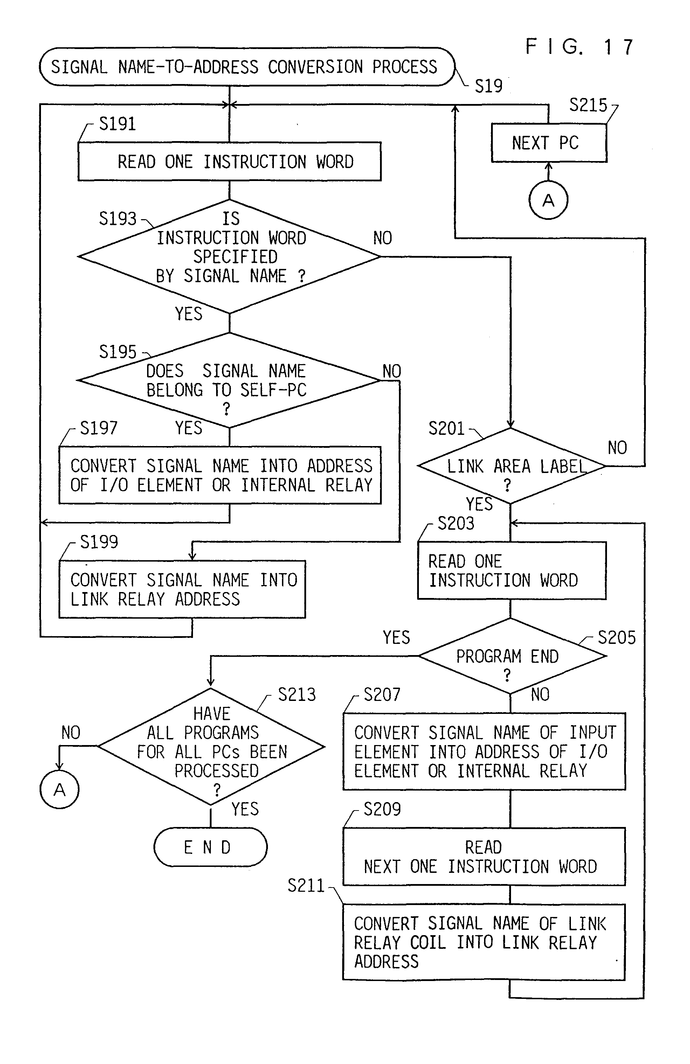

### e. Address Converting Process (Step S19, Fig. 17)

In an address converting process S19, the identifiers (signal names) each consisting of the device name and the element name and included in the programs stored in the primary intermediate program memory 1511 (Fig. 16) are converted into the addresses in the element memory 2506 of each PC.

First, one instruction word is read from the primary intermediate program memory 1511 in step S191 and, in step S193 it is judged whether or not the one instruction word has a signal name. If the decision in step S193 is affirmative, in step S195 it is judged whether or not the signal name belongs to the self-PC. If the judgment in step S195 is affirmative, the signal name is converted into the address of the element memory 2506 accessible by only the self-PC (addresses "0000" to "OFFF" for the I/O elements and addresses "1000" to "1 FFF" for the internal relays) in step S197.

If the judgment in step S195 is negative, the signal name is converted into the common link relay address in the link relay memory 2505 capable of being commonly referred to by all the PCs in step S199.

For example since the input element R6X which is the internal relay belongs to the self-PC, i.e., PC01, the signal name R6X is converted into the address "1200" with reference to the internal relay allocation memory 1508 (Fig. 11).

Since the input element 12R4X refers to the I/O element R4X belonging to another PC PC12, i.e., the element 12R4X is the external input element, the signal 12R4X is converted to the link relay address "3019" on the basis of the data stored in the link signal/address correspondence memory 1510.

When the label indicating the link area is read in step S191, the judgment of step S193 is negative. In the case, step S201 is carried out, it is judged whether or not the instruction word is the link area label. If the word is the link area label, steps after step S203 are executed to convert the signal names into the addresses in the link circuits. One of the link circuits comprises the contact (input element) and the link relay coil.

Accordingly, first, one instruction word (an instruction for loading the status of the input element) is read in step S203, the signal name of the input element is converted into the addresses in the element memory 2506 accessible to only the self-PC, i.e., PC01 (addresses "0000" to "OFFF" for the I/O elements and addresses "1000" to "1 FFF" for the internal relays) in step S207. Then, one instruction word associated with the relay coil is read in step S209. The signal name is converted into the link relay addresses of the link relay memory 2505 accessible to all the PCs.

This process is executed repeatedly for all the programs for all the PCs stored in the primary intermediate program memory 1511 to convert the signal names each consisting of the device name and the element name into the addresses of the memories.

Consequently, the secondary source program corresponding to the relay ladder diagram as shown in Fig. 18 is stored in the secondary intermediate program memory 1512.

### f. Link Parameter Specifying Process (Step S21)

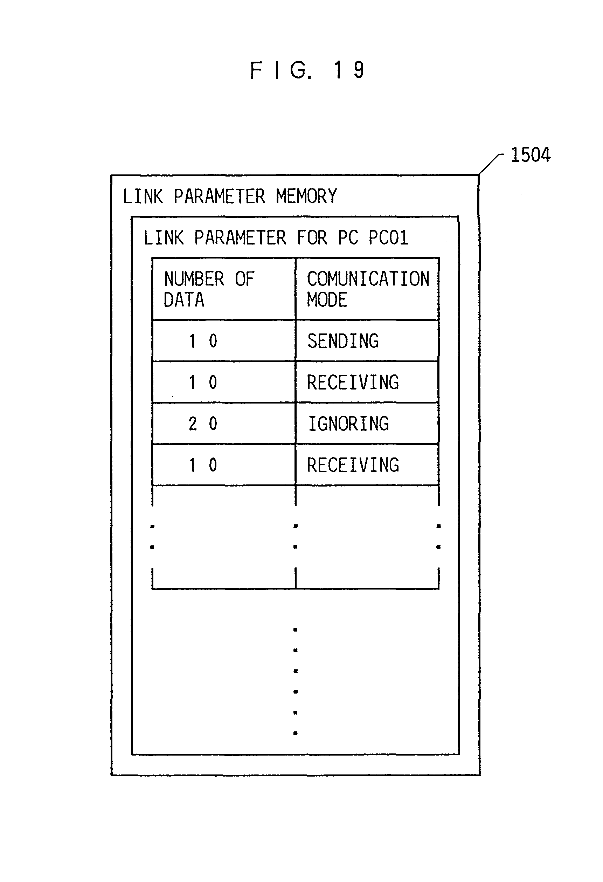

In a link parameter specifying step S21, the link parameters are specified and stored in the link parameter memory 1504 (Fig. 19). The link parameters designate communication modes, i.e., a sending mode, a receiving mode and an ignoring mode, for the PCs PC01 to PC32 in the order of sending out a series of data on the link line (the order of the link relay addresses). The link parameters are made by referring to the link signal/address correspondence memory 1510 (Fig. 15) and the link circuits of all the PCs.

The status data of the link relay coils in the link circuit of a certain PC have to be sent to the other PCs and the status data of the external input elements has to be received from the corresponding PC. Accordingly, the link relay addresses whose status data have to he sent out from the respective PCs and have to he received into the link relay address in the respective PCs can be determined with reference to the link circuits added to the programs for the PCs and the link signal/address correspondence memory 1510.

Thus, the sending mode, the receiving mode or the ignoring mode (neither sending nor receiving) are determined for each PC starting with the leading address "3000" among the link relay addresses.

For example, from Fig. 15, the signal name of the input element assigned to the leading link relay address is "M1 D2P".

Then, the tables shown in Fig. 13 are looked up sequentially. The I/O element specified by the signal name "M1 D2P" is found in the table for the PC PC01 and its designation data are "1". Therefore, the communication mode of the link relay address "3000" for the PC PC01 is the sending mode.

Then, the link signal designation table for the PC PC11 is looked up. The I/O element specified by the signal name "M1 D2P" is found in the table and its designation data are "0". Therefore, the communication mode of the link relay address "3000" for the PC PC11 is the receiving mode.

If no I/O element specified by the signal name "M1 D2P" is found in the link signal designation table for a certain PC, the communication mode of the link relay address "3000" for the PC is the ignoring mode.

Thus the communication mode for the first address is specified for each PC. The same procedure is repeated to specify link parameters as shown in Fig. 19 for all the PCs.

### g. Graphic-to-Language Data Converting Process (Step S23)

In a graphic-to-language data converting step S23, the source program for each PC stored in the secondary intermediate program memory 1512 (Fig. 18) is converted into the object program coded by machine language for executing the program, and the object program for each PC is stored in the object program memory 1503. The graphic-to-language data converting step S23 is well known and hence the description thereof will be omitted.

The object programs and link parameters for PCs thus created are transferred to the sequence control program memory 2503 of PCs in a known manner.

### (4) Communication in a System Controlled by PCs

Communication in the system controlled by the PCs thus programmed will be described hereinafter with reference to Figs. 20 to 25.

Referring to Fig. 20, each of the PCs comprises a CPU 200 for sequence control and communication control, a RAM 250. The RAM comprises a sequence control program memory 2503 for storing the sequence control program and a link parameter memory 2504 for storing the link parameters created by the programming device, the element memory 2506 for storing status data of the I/O elements and the internal relays, and the link relay memory 2505 for storing status data of the link relays transferred thereto through the link line. And also each of the PCs comprises a ROM 210 storing programs to be executed by the CPU 200, a timer 260 for timing communication between the PCs, a driving circuit 270 and an I/O interface 240. The driving circuit 270 drives relay coils 2701, i.e., the output elements, and detects the status of the relay contacts or limit switches 2702, i.e., the input elements.

Fig. 21 shows the functions of the PC PC01. The functions of the rest of the PCs are the same as those shown in Fig. 21.

Referring to Fig. 21, a control block comprises a sequence processing unit 201 for sequence control and a communication control unit 202 for communication control. A storage block comprises the sequence control program memory 2503, the link parameter memory 2504, the link relay memory 2505, the element memory 2506 and a communication mode memory 2507. The communication control unit 202 comprises a sender/receiver 202a, a send/receive data number counter 202b and a send/receive data transfer unit 202c.

The link parameters specify the communication modes of the PC. In this system, communication between the PCs is started in synchronism with start bits (communication start timing signal) provided at predetermined time intervals by the timer 260. During communication, data are sent out successively on the link line in order of the PCs PC01, PC11, PC12, ... and PC32. The PCs receive (the receiving mode) or ignores (the ignoring mode) according to the link parameters determined for the PCs.

For example, the link parameters for the PC PC01 are determined so that the PC PC01 sends out the first 10 bits, receives the next 10 bits, ignores the third 20 bits, receives the fourth 10 bits and so on as shown in Fig. 21.

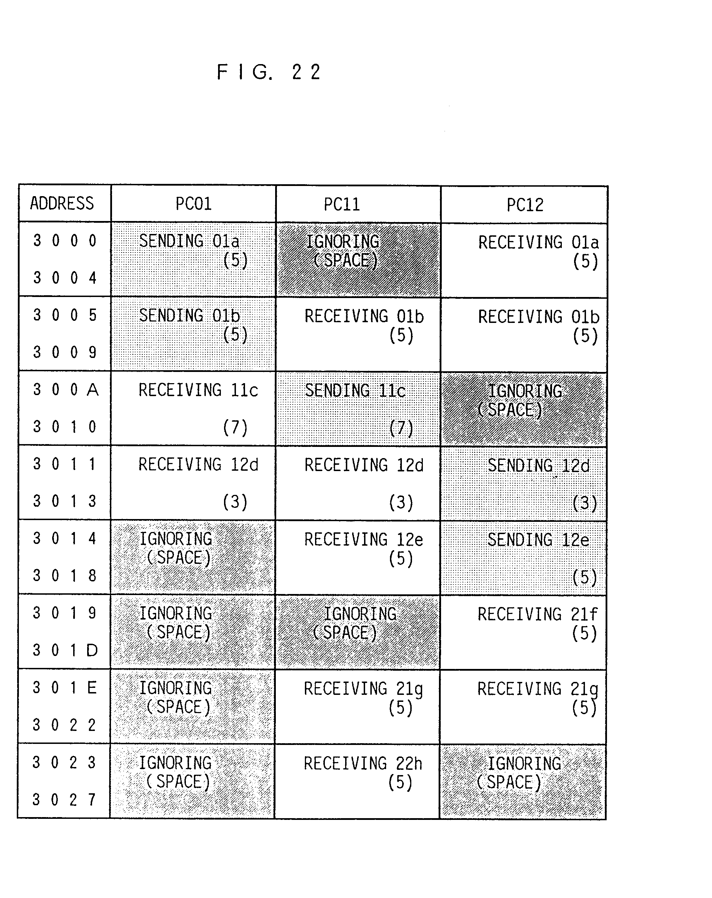

Fig. 22 shows the communication modes of the PCs. In Fig. 22, subscript numerals attached to the communication modes, such as "01" and "11" denote the numbers of the sending PCs, subscript characters, such as a and b, denote data groups and parenthesized numerals, such as "(5)", represent the numbers of bits.

For example, data groups a and b of 10 bits, i.e., a 5-bit data group a and a 5-bit data group b, sent out from the PC PC01 are received by the PC PC12 according to the link parameters and the data groups a and b are stored in the link relay memory, while the PC PC 11 receives only the 5-bit data group b and ignores the 5-bit data group a according to the link parameter. The 5-bit data group b received by the PC PC11 is stored in the link relay memory.

A 7-bit data group c sent out from the PC PC11 is received by the PC PC01 according to the link parameter and stored in the link relay memory, while the PC PC12 ignores the 7-bit data group c according to the link parameter.

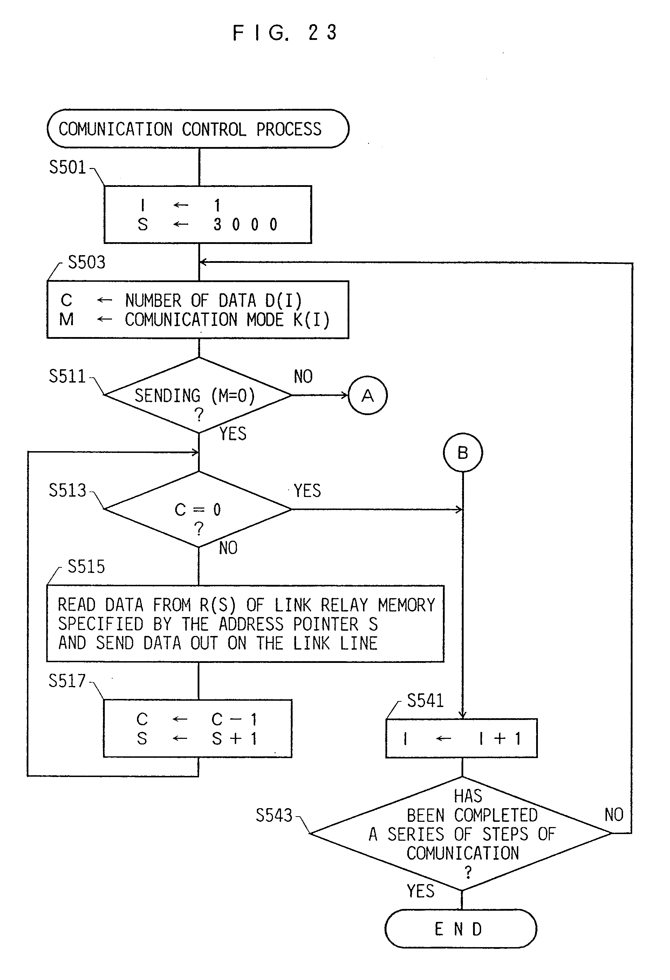

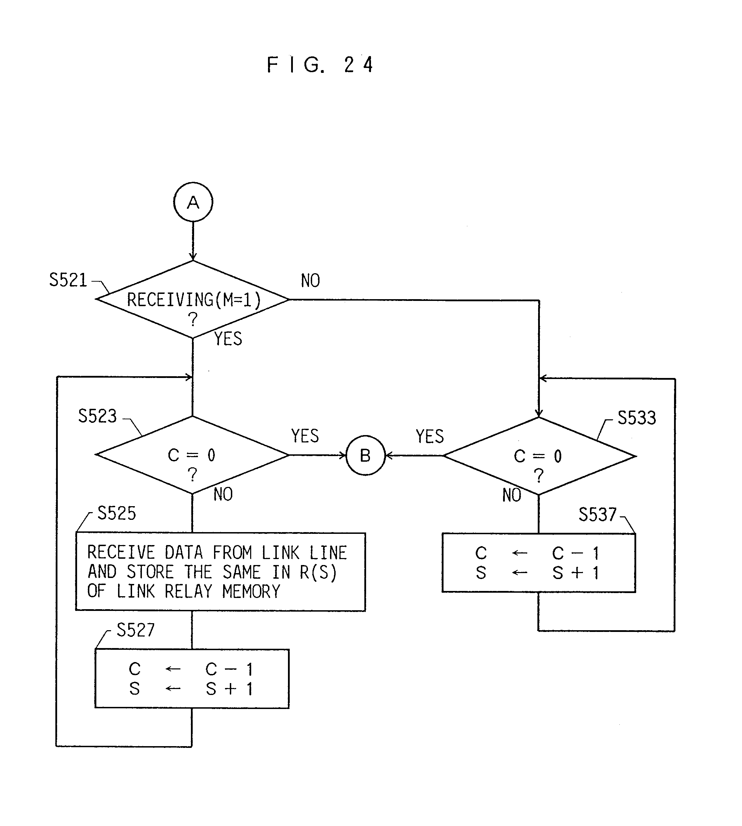

Communication control process to be executed by each PC will be described hereinafter with reference to Figs. 23 and 24. The communication control process is executed every time the communication start signal is provided.

First, a parameter I indicating specifying sequence member is set to "1" and an address pointer S indicating the address in the link relay memory 2505 is set to "3000" in step S501. The sequence number corresponds to the frame number in the link parameter memory 2504. For example, when the sequence number of the PC PC01 is "1", the number of data is "10" and the communication mode is the sending mode.

Then, number D(I) of data and the communication mode K(I) read from the link parameter memory 2504 are substituted for a variable C and a variable M in step S503, respectively. M = 0 for the sending mode, M = 1 for the receiving mode, and M 0 0 and M 1 1 for the ignoring mode.

In step S511, it is judged whether or not the sending mode is specified. If the judgment of step S511 is affirmative, the data stored at the address of the link relay memory 2505 specified by the address pointer S are sent out on the link line in step S515. The variable C is decremented by one and the address pointer S is incremented by one in step S517.

This process is repeated until the variable C becomes "0", namely, until all the data of the sequence number I are sent out on the link line.

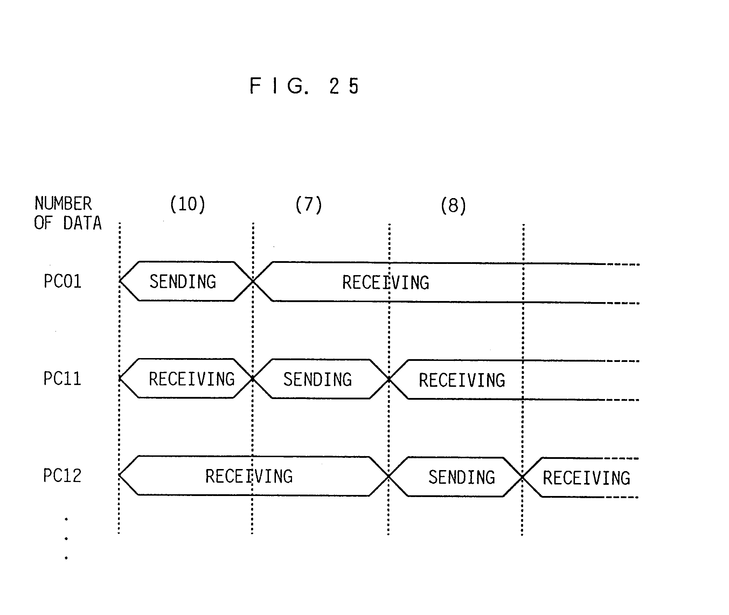

In step S513, it is judged whether or not C = 0, and if the judgment of step S513 is affirmative, the parameter I is incremented by one in step S541. And in step S543 it is judged whether or not one cycle communication, i.e., a series of steps of communication shown in Fig. 25, has been completed. The program returns to step S503 if the judgment of step S543 is negative. Otherwise, the communication control process is suspended until the next communication start signal is provided if the judgment of step S543 is affirmative.

If the judgment of step S511 is negative, i.e., if the sending mode is not specified, in step S521 it is judged whether or not the receiving mode is specified. If the judgment of the step S521 is affirmative, the data transmitted through the link line is received and stored at the address of link relay memory 2505 specified by the address pointer S in step S525. In step S527, the variable C is decremented by one and the address pointer S is incremented by one. This procedure is repeated until the variable C becomes "0", namely, until all the data of the sequence number I are received from the link line.

When the ignoring mode is specified, the judgment of step S511 is negative, i.e., the sending mode is not specified, and the judgment of step S521 is negative, i.e., the receiving mode is not specified. Then, the variable C is decremented by one and the address pointer S is incremented by one in step S537.

Thus, the data groups sent out from the PCs are transmitted successively through the link line and the PCs receive only the necessary data groups, respectively.

In creating a program by the programming device of the present invention for the sequence control of PCs included in the system in which the PCs are interconnected by the link line for the interlock control, the operator needs only to do next things. One is attaching the identifiers, i.e., signal name, each of which consists of the device identification code and the element identification code for the I/O elements and the internal relays. The other is making the table indicating a correspondence relation between the respective PCs and the devices controlled by the PC and the I/O element allocation table.

When the programming device is started after the completion of the data input operation, the external input elements referring to the I/O elements belonging to another PC are extracted automatically and the communication control program for the control of communication through the link line among the PCs is created automatically.

Accordingly, the present invention can eliminates work required by the conventional programming device, such as link table creating work, and prevents troubles attributable to errors made in carrying out such work. Furthermore, the present invention facilitates data input operation and program correcting operation.

Still further, since a program can be created for each device, the program can be readily changed when a device having been controlled by a certain PC is changed to be controlled by another PC.

A programming device for PCs which are interlocked through a link line is described. In the present programming device, an allocation table representing a relation between respective PCs and devices controlled by the respective PCs is entered. In the first program for the first PC, an external input element belonging to the second PC is described with an identifier. The external input element is extracted from the first program and I/O element corresponding to the external input element is designated as a referred-to I/O element in the second program. The referred-to I/O element is related to a link element assigned to a link address which can be commonly accessed by the first and second PCs. An instruction step for making status data of the link element equal to status data of the referred-to I/O element is added to the second program. In the first program, the identifier of the external element is converted into the link address assigned to the link element. Thus, programs enabling an interlock control among a plurality of PCs are automatically created.

## Claims

1. A programming device for creating programs for sequence control for first and second programmable controllers wherein status data of an I/O element connected to said second programmable controller is read through a signal transmission link line by said first programmable controller and used as the status data of an external input element in said first programmable controller for the sequence control to enable an interlock control between said programmable controllers, said programming device comprising:
program input means for inputting a first program for said first programmable controller including said external input element with an identifier, which is said I/O element belonging to said second programmable controller, and a second program for said second programmable controller;
extraction means for extracting said external input element from said first program;
link table creating means for creating a link table designating that said I/O element belonging to said second programmable controller and having the same identifier as said external input element is a referred-to I/O element being referred to by said first programmable controller;
first program modification means for relating said referred-to I/O element designated in said link table to a link element allocated to a link address which can be commonly accessed by said first and second programmable controllers, and adding an instruction step for making status data of said link element equal to status data of said referred-to I/O element to said second program including said referred-to element; and
second program modification means for converting said identifier of said external input element into said address of said link element in said first program including said external input element.

2. A programming device according to claim 1, further comprising:
allocation input means for inputting into an allocation table data defining devices controlled by respective programmable controllers; wherein
said extraction means extracts said external input element with reference to said allocation table.

3. A programming device according to claim 1, wherein said identifier of said external input element comprises a programmable controller identification code and an address identification code specifying said second programmable controller and an address of said I/O element in said second programmable controller, respectively.

4. A programming device according to claim 2, wherein said identifier of said external input element comprises a device identification code and an element identification code specifying a device associated with said external input element and said I/O element in said device belonging to said second programmable controller, respectively.

5. A programming device according to claim 2, further comprising segmenting and aggregating means for segmenting said first and second programs in programs for respective devices, and aggregating said programs for said respective programmable controllers.

6. A programming device according to claim 4, wherein said data in said allocation table defines a relation between numbers of said programmable controllers and said device identification codes of said devices controlled by said respective programmable controllers.

7. A programming device according to claim 4, further comprising storage means for storing a table defining a relation between said identifier and a corresponding I/O address in said second programmable controller.

8. A programming device according to claim 1, further comprising storage means for storing a table defining a relation between said identifier specifying said external input element and a corresponding link address of said link element.

9. A programming device according to claim 1, wherein said first program modification means adds a link circuit comprising a series connection of a relay contact representing said referred-to I/O element and a relay coil representing said link element.

10. A method of creating programs for sequence control for first and second programmable controllers wherein status data of an I/O element connected to said second programmable controller is read through a signal transmission link line by said first programmable controller and used as the status data of an external input element in said first programmable controller for the sequence control to enable an interlock control between said programmable controllers, said method comprising steps of:
inputting a first program for said first programmable controller including said external input element with an identifier, which is said I/O element belonging to said second programmable controller, and a second program for said second programmable controller;
extracting said external input element from said first program;
creating a link table designating that said I/O element belonging to said second programmable controller and having the same identifier as said external input element is a referred-to I/O element being referred to by said first programmable controller;
relating said referred-to I/O element designated in said link table to a link element allocated to a link address which can be commonly accessed by said first and second programmable controllers, and adding an instruction step for making status data of said link element equal to status data of said referred-to I/O element to said second program including said referred-to element; and
converting said identifier of said external input element into said address of said link element in said first program including said external input element.
